# EUROPEAN PATENT APPLICATION

(11) **EP 3 434 973 A1**
(43) Date of publication of application: **30.01.2019**
(21) Application number: 16895430.3
(22) Date of filing: 25.03.2016
(51) Int. Cl.: F22B 37/10, F16L 57/00

(54) **BOILER TUBE REINFORCEMENT DEVICE AND BOILER TUBE REINFORCEMENT METHOD**

(71) Applicant: The Chugoku Electric Power Co., Inc., Hiroshima-shi, Hiroshima 730-8701 (JP)
(72) Inventor: MATSUMURA, Hideo, Hiroshima-shi Hiroshima 730-8701 (JP); NISHIDA, Hidetaka, Hiroshima-shi Hiroshima 730-8701 (JP)
(74) Representative: Osha Liang
(86) International application number: PCT/JP2016/059589
(87) International publication number: WO 2017/163395

(57) **Abstract**

[Solution]

A reinforcement device to reinforce a boiler tube having a weld portion includes : a strip- shaped first steel plate configured to be wound and fixed by welding in a region including the weld portion; a first reinforcement member having a shape to make surface contact with an outer peripheral surface corresponding to one semi-circumference of the boiler tube in an outer peripheral surface of the first steel plate wound around the boiler tube; a second reinforcement member having a shape to make surface contact with an outer peripheral surface corresponding to another semi-circumference of the boiler tube in the outer peripheral surface of the first steel plate, the second reinforcement member configured to cover the outer peripheral surface of the first steel plate together with the first reinforcement member; and a coupling member configured to couple the first and second reinforcement members together around the boiler tube.

## Description

### [Technical Field]

The present disclosure relates to a boiler tube reinforcement device and a boiler tube reinforcement method.

### [Background Art]

For example, a boiler for power generation that is installed in a thermal power plant to rotate a turbine includes: an economizer that preheats boiler feed water; a water-cooled wall that forms a housing of the boiler and converts the boiler feed water into saturated steam; a superheater that further heats the saturated steam to be converted into superheated steam; a reheater that reheats steam from the turbine to be supplied to the turbine again; pipes that guide steam from the superheater and reheater to the turbine; and the like. The above pipes that guide steam from the superheater and reheater to the steam turbine are constituted by boiler tubes made of heat-resistant steel (for example, low-alloy steel). When the boiler for power generation is activated, high temperature and high pressure steam flows through the boiler tubes, and when the boiler for power generation is halted, the high temperature and high pressure steam flowing through the boiler tubes stop flowing. That is, in association with the activation and halt of the boiler for power generation, thermal stress is created in the boiler tubes . When the boiler for power generation continues to be used over a long period of time, creep-fatigue damage is created in the boiler tubes according to the thermal stress, which may cause deformation such as an increase in external diameter of the boiler tubes, occurrence of deformation in a weld portion, and the like. Thus, to prevent an accident caused by deterioration of such a boiler tube, the deterioration condition of the boiler tube is periodically inspected, and trend management with respect to bulging out, reduced thickness, and the like as described above is implemented (for example, Patent Literature 1).

### [Citation List]

### [Patent Literature]

[PTL1] Japanese Patent Application Publication No. 2013-122411

### [Summary of Invention]

### [Technical Problem]

When the boiler tube is diagnosed as having creep-fatigue damage progressing and a remaining life shorter than a predetermined time period, as a result of an inspection of the deterioration condition of the boiler tube, the corresponding part of the boiler tube needs to be replaced with a new boiler tube. However, such replacement of the boiler tube requires operations of cutting and welding the boiler tube, and thus a shutdown period of the boiler for power generation may be prolonged.

Accordingly, an aspect of the present disclosure is to provide a boiler tube reinforcement device and a boiler tube reinforcement method capable of increasing a life of a boiler tube with creep-fatigue damage.

### [Solution to Problem]

A main aspect of the present disclosure to solve the above-described problems is a boiler tube reinforcement device configured to reinforce a boiler tube including a weld portion, the reinforcement device including: a strip-shaped first steel plate configured to be wound and fixed by welding in a region including the weld portion of the boiler tube; a first reinforcement member having a shape to be in surface contact with an outer peripheral surface corresponding to one semi-circumference of the boiler tube in an outer peripheral surface of the first steel plate wound around the boiler tube; a second reinforcement member having a shape to be in surface contact with an outer peripheral surface corresponding to another semi-circumference of the boiler tube in the outer peripheral surface of the first steel plate wound around the boiler tube, the second reinforcement member being configured to cover the outer peripheral surface of the first steel plate together with the first reinforcement member; and a coupling member configured to couple the first reinforcement member and the second reinforcement member together around the boiler tube.

Other features of the present disclosure will become apparent from descriptions of the accompanying drawings and of the present specification.

### [Advantageous Effects]

According to the present disclosure, it becomes possible to reinforce a boiler tube so as to minimize thermal stress, thereby being able to increase a life of the boiler tube.

### [Brief Description of Drawings]

FIG. 1 is a diagram illustrating an example of an overall configuration of a thermal power plant that uses a reinforcement device according to an embodiment of the present disclosure.
FIG. 2 is a perspective view illustrating an example of thermal stress and a straight portion of a boiler tube according to a first embodiment.
FIG. 3 is a perspective view illustrating an example when a steel strip is wound on a weld portion according to a first embodiment.
FIG. 4 is a perspective view illustrating an example of a state where a steel strip has been wound on a weldportion according to a first embodiment.
FIG. 5 is a cross-sectional view illustrating an example of an XZ cross-section of a steel strip according to a first embodiment.
FIG. 6 is an exploded perspective view illustrating a state before a reinforcement member according to a first embodiment is mounted to a straight portion of a boiler tube.
FIG. 7 is a plan view illustrating a state before a reinforcement member according to a first embodiment is mounted to a straight portion of a boiler tube.
FIG. 8 is a perspective view illustrating a state after a reinforcement member according to a first embodiment has been mounted to a straight portion of a boiler tube.
FIG. 9 is a plan view illustrating a state after a reinforcement member according to a first embodiment has been mounted to a straight portion of a boiler tube.
FIG. 10 is a plan view illustrating a state after a reinforcement member according to a first embodiment has been mounted to a straight portion of a boiler tube.
FIG. 11 is a perspective view illustrating an example of thermal stress and an elbow portion of a boiler tube according to a second embodiment.
FIG. 12 is a perspective view illustrating an example when a steel strip is wound on a weld portion according to a second embodiment.
FIG. 13 is a perspective view illustrating an example of a state where a steel strip has been wound on a weld portion according to a second embodiment.
FIG. 14 is an exploded perspective view illustrating a state before a reinforcement member according to a second embodiment is mounted to an elbow portion of a boiler tube.
FIG. 15 is a plan view illustrating a state before a reinforcement member according to a second embodiment is mounted to an elbow portion of a boiler tube.
FIG. 16 is a perspective view illustrating a state after a reinforcement member according to a second embodiment has been mounted to an elbow portion of a boiler tube.
FIG. 17 is a plan view illustrating a state after a reinforcement member according to a second embodiment has been mounted to an elbow portion of a boiler tube.
FIG. 18 is another plan view illustrating a state after a reinforcement member according to a second embodiment has been mounted to an elbow portion of a boiler tube.
FIG. 19 is still another plan view illustrating a state after a reinforcement member according to a second embodiment has been mounted to an elbow portion of a boiler tube.
FIG. 20 is a perspective view illustrating an example of a state where a steel strip has been wound on a weld portion according to a third embodiment.
FIG. 21 is a plan view illustrating an example of a reinforcement steel plate according to a third embodiment.
FIG. 22 is a perspective view illustrating an example when a reinforcement steel plate according to a third embodiment is wrapped over a steel strip.
FIG. 23 is a perspective view illustrating an example of a state where a reinforcement steel plate according to a third embodiment has been wrapped.
FIG. 24 is an exploded perspective view illustrating a state before a reinforcement member according to a third embodiment is mounted to a straight portion of a boiler tube.
FIG. 25 is a plan view illustrating a state before a reinforcement member according to a third embodiment is mounted to a straight portion of a boiler tube.

### [Description of Embodiment]

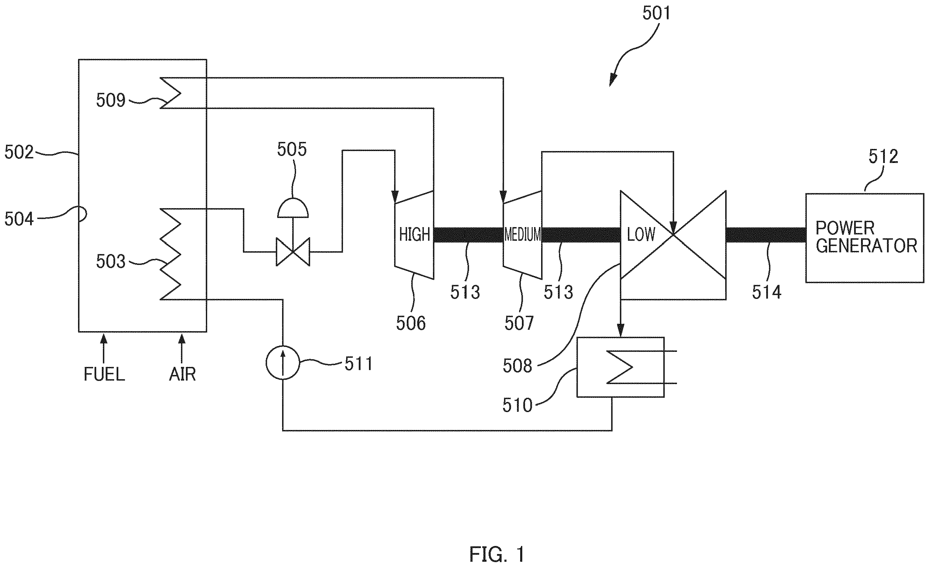

At least the following matters will become apparent from descriptions of the present specification and of the accompanying drawings. Note that, in FIGS. 1 to 25, a description will be made while the same parts or elements in FIGS. 1 to 9 are given the same reference numerals.

### ===Overall Configuration of Power Plant===

FIG. 1 is a diagram illustrating an overall configuration of a thermal power plant that employs a reinforcement device according to an embodiment of the present disclosure. The overall configuration of the thermal power plant illustrated in FIG. 1 is an example for easy understanding of the description of the reinforcement device for a boiler tube according to an embodiment of the present disclosure. The reinforcement device for the boiler tube according to an embodiment of the present disclosure can also be used to reinforce a boiler tube in a thermal power plant having a configuration different from the thermal power plant in FIG. 1. However, such a pipe reinforcement device according to an embodiment of the present disclosure needs to be preliminarily designed corresponding to the outer diameter of the boiler tube installed in each thermal power plant.

A thermal power plant 501 includes, for example, a boiler 502, a steam generator 503, a water-cooled wall 504, a steam valve 505, a high-pressure turbine 506, a medium-pressure turbine 507, a low-pressure turbine 508, a reheater 509, a condenser 510, a feed pump 511, and a power generator 512.

The boiler 502 is a heat exchanger configured to mix fuel supplied from the exterior (for example, pulverized coal) with air, to generate combustion gas, and convert water into steam using heat (combustion heat) of the combustion gas. The boiler 502 houses the steam generator 503, the water-cooled wall 504, and the reheater 509. The steam generator 503 includes an economizer (not illustrated) configured to preheat water supplied from the condenser 510, and a superheater (not illustrated) configured to further heat saturated steam supplied from the water-cooled wall 504 to be converted into superheated steam. The water-cooled wall 504 forms a housing of the boiler 502, and is configured to convert the preheated water into the saturated steam to be supplied to the superheater. The steam valve 505 is a regulating valve configured to control a flow rate of the superheated steam generated in the steam generator 503.

The high-pressure turbine 506, the medium-pressure turbine 507, and the low-pressure turbine 508 have a rotation shaft 513 in common, and the rotation shaft 513 is coupled to a rotation shaft 514 of the power generator 512. The high-pressure turbine 506 is supplied with the superheated steam (first steam) generated in the steam generator 503 via the steam valve 505. The high-pressure turbine 506 is configured to expand the first steam, and supply such expanded steam (second steam) to the reheater 509 in the boiler 502. The reheater 509 is configured to reheat the second steam to be supplied to the medium-pressure turbine 507 as such reheated steam (third steam). The medium-pressure turbine 507 is configured to expand the third steam, to supply such expanded steam (fourth steam) to the low-pressure turbine 508. The low-pressure turbine 508 is configured to expand the fourth steam.

The condenser 510 is configured to condense exhaust obtained after the low-pressure turbine 508 expands the fourth steam, to be converted into condensate. The feed pump 511 is configured to boost the condensate generated in the condenser 510 to be returned to the steam generator 503 in the boiler 502 as feed water.

Then, the power generator 512 is driven by power generated when the fourth steamhas been expanded, so as to generate electric power. The superheated steam (first steam) generated in the steam generator 503 and the reheated steam reheated in the reheater 509 is guided to the turbines by the boiler tubes.

In the above-described process of power generation, high temperature and high pressure fluid or gas (hereinafter, referred to as "thermal fluid") circulates through boiler tubes. Since thermal stress is generated in such a boiler tube by thermal fluid, creep damage may be caused therein. Thermal stress indicates stress that acts on the boiler tube according to such a force that the boiler tube will expand or contract, for example, with heat obtained from the thermal fluid circulating through the boiler tube. In specific, for example, in the case where both ends of the boiler tube are fixed, free expansion of the boiler tube is restricted when the boiler tube is heated. This causes an expansion force due to thermal stress to act on the boiler tube. Further, in the case where both ends of the boiler tube are fixed and the boiler has a bend, a bending force or twisting force caused by thermal stress acts particularly on or around such a bend portion due to free expansion of the boiler tube when heated. Creep damage indicates damage caused by creep deformation of the boiler tube. Creep deformation indicates a phenomenon where, for example, in a high-temperature environment, when the boiler tube is under a predetermined stress, the boiler tube deforms with time. That is, creep damage may be caused in the boiler tube by the above-described thermal stress under high-temperature environment of a power plant.

The reinforcement device according to an embodiment of the present disclosure is provided to an outer peripheral surface including a weld portion of the boiler tube so as to minimize such expansion force, bending force, and twisting force caused by thermal stress so that the above described creep-fatigue damage of the boiler tube is minimized, and an aspect of the reinforcement device is to reinforce the boiler tube.

### ===First Embodiment===

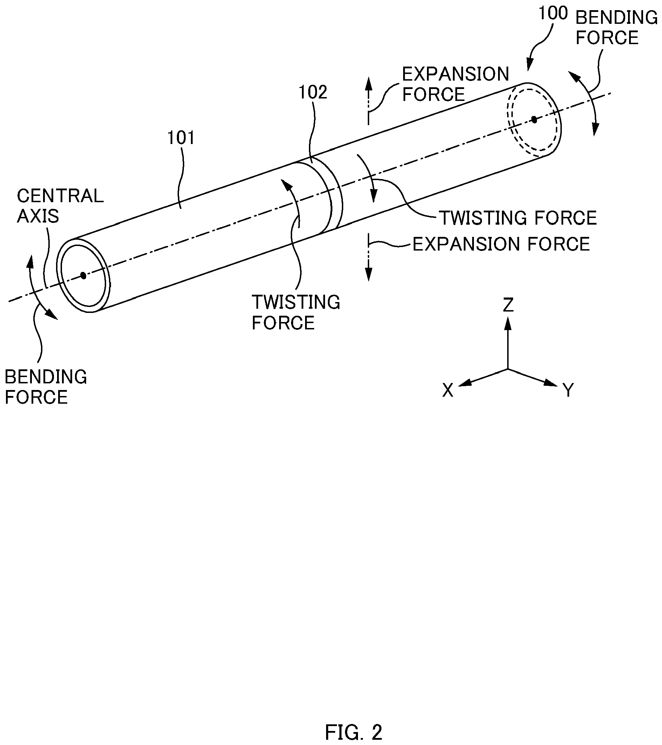

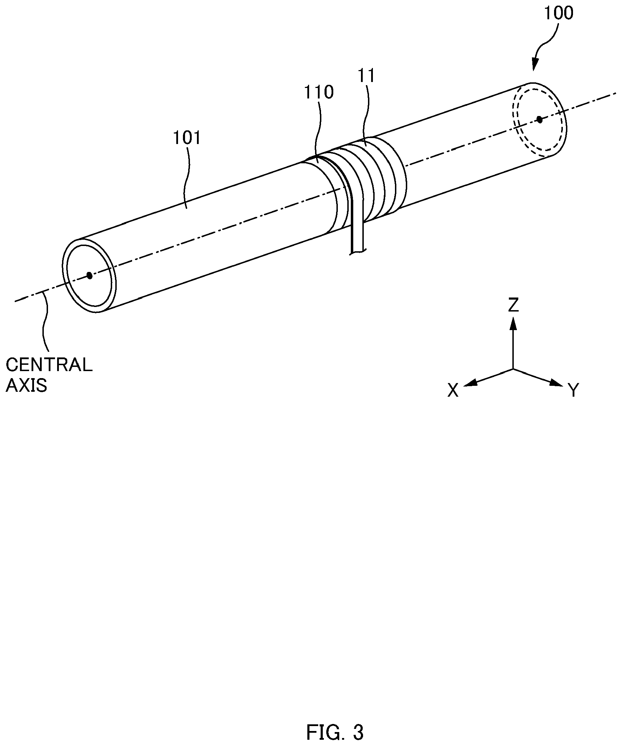

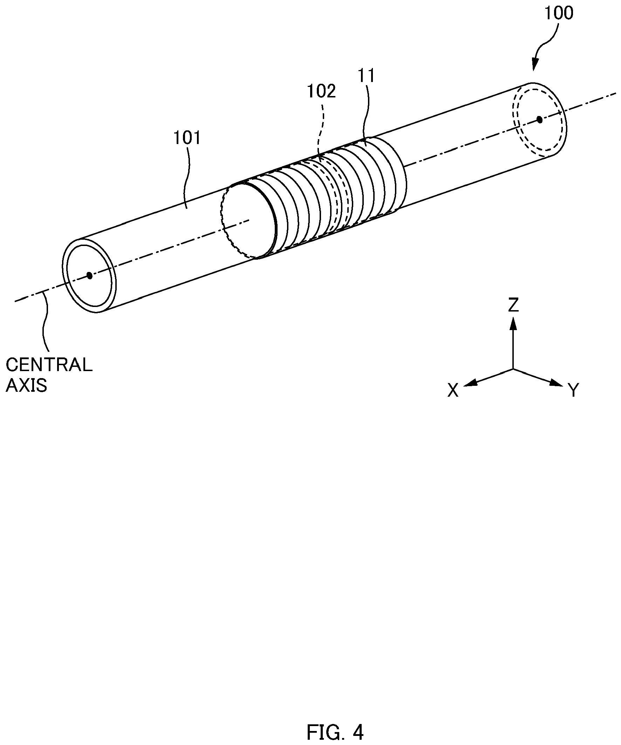

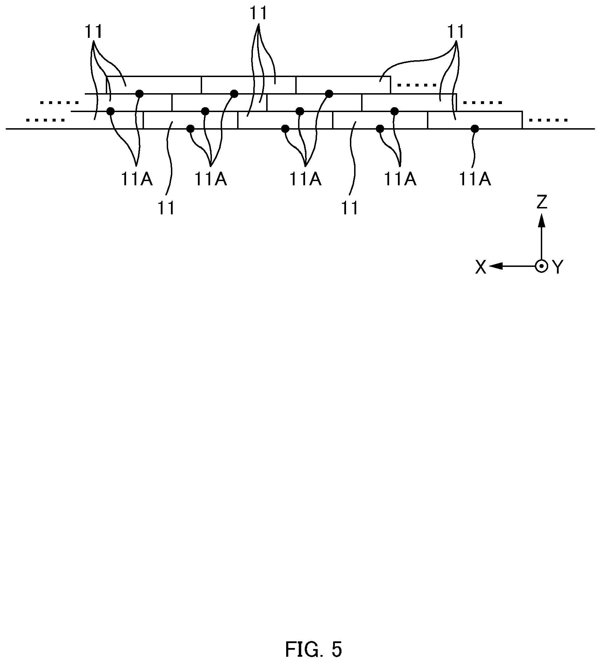

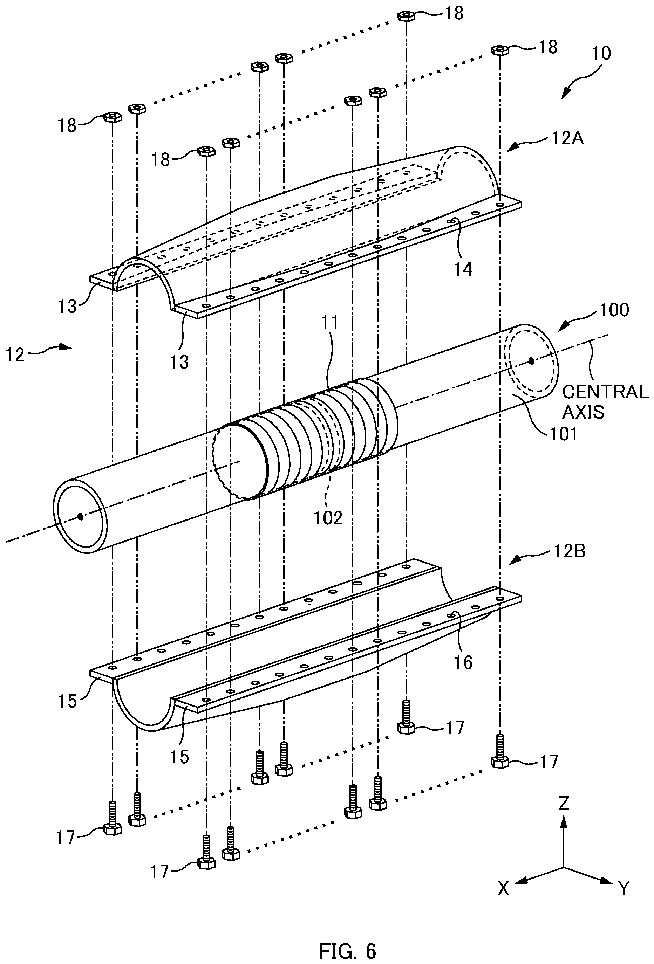

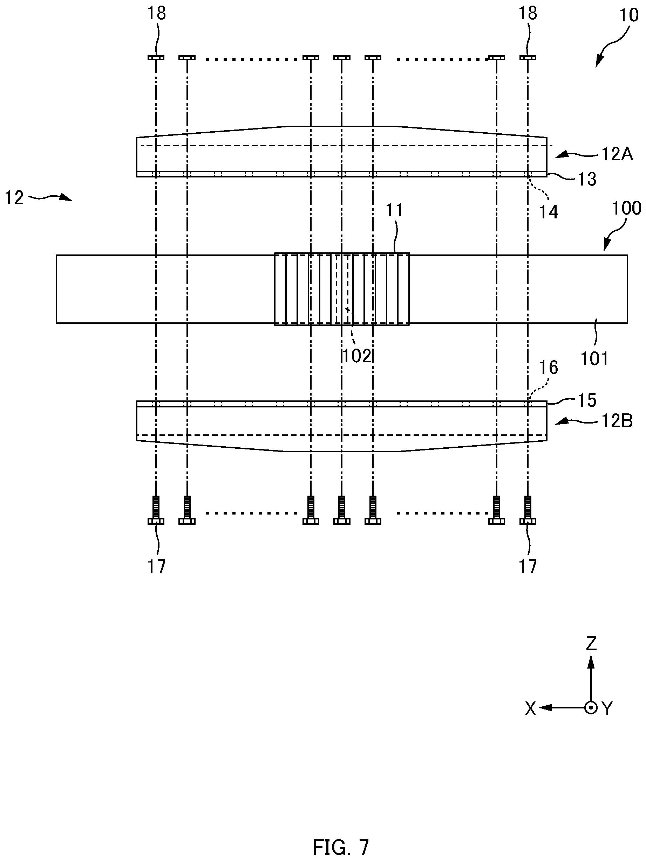

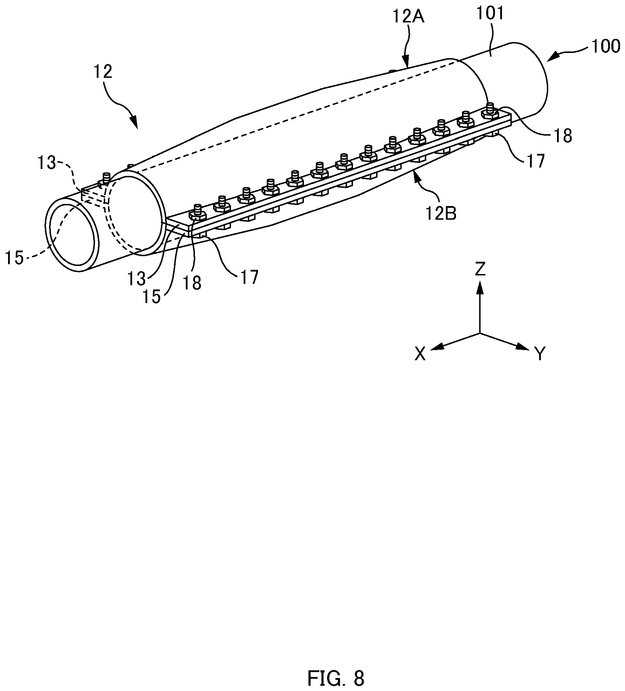

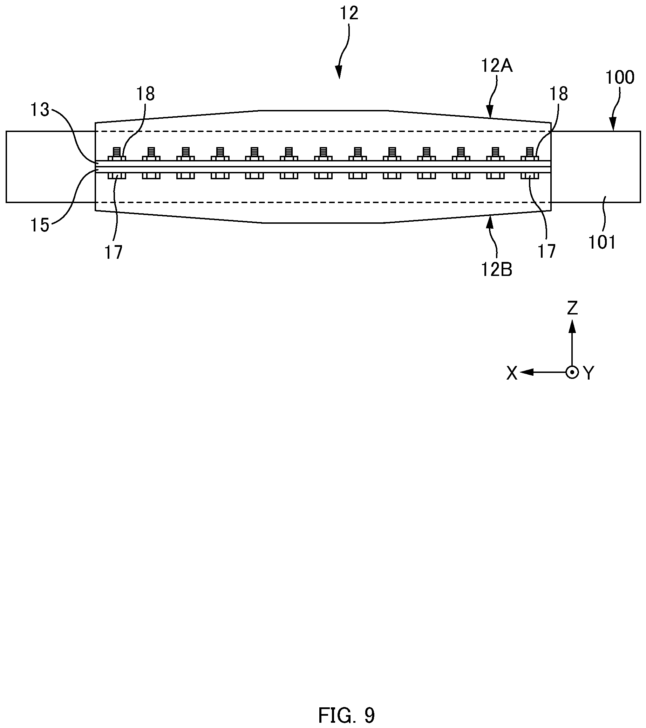

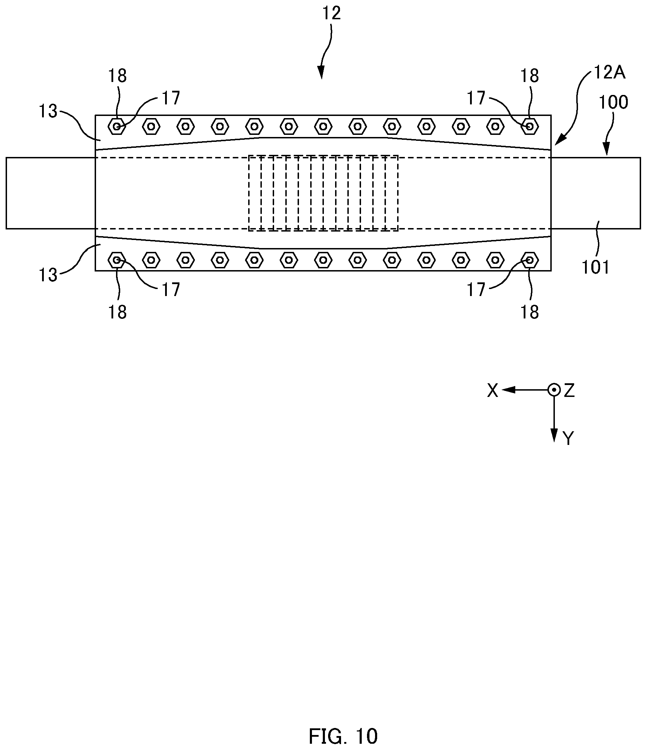

FIG. 2 is a perspective view illustrating an example of thermal stress and a straight portion of the boiler tube according to a first embodiment. FIG. 3 is a perspective view illustrating an example when a steel strip is wound on a weld portion according to the first embodiment. FIG. 4 is a perspective view illustrating an example of a state where the steel strip has been wound on the weld portion according to the first embodiment. FIG. 5 is a cross-sectional view illustrating an example of an XZ cross-section of the steel strip according to the first embodiment. FIG. 6 is an exploded perspective view illustrating a state before a reinforcement member according to the first embodiment is mounted to the straight portion of the boiler tube. FIG. 7 is a plan view illustrating a state before the reinforcement member according to the first embodiment is mounted to the straight portion of the boiler tube. FIG. 8 is a perspective view illustrating a state after the reinforcement member according to the first embodiment has been mounted to the straight portion of the boiler tube. FIG. 9 is a plan view illustrating a state after the reinforcement member according to the first embodiment has been mounted to the straight portion of the boiler tube. FIG. 10 is a plan view illustrating a state after the reinforcement member according to the first embodiment has been mounted to the straight portion of the boiler tube. Note that an X-axis is an axis along a longitudinal direction of the boiler tube, and a YZ-plane formed with a Y-axis and a Z-axis is a surface parallel to a cross-section of the boiler tube.

Hereinafter, a reinforcement device 10 according to the first embodiment will be described with reference to FIGS. 2 to 10.

The reinforcement device 10 according to the first embodiment is a device configured to reinforce a straight portion 101 of a boiler tube 100 included in the steam generator 503 or the reheater 509 illustrated in FIG. 1. The boiler tube 100 is made of heat-resistant steel (for example, low-alloy steel, high-alloy steel, carbon steel, and stainless steel), and the straight portion 101 has, for example, a cylindrical shape. It is assumed that the boiler tube 100 to which the reinforcement device 10 is to be mounted includes, as portions thereof, the straight portion 101 and a weld portion 102 that is created as a result of a welding process performed on cross-section openings of such boiler tubes 100 adjacent to each other. Further, as illustrated in FIG. 2, expansion force, bending force, and twisting force caused by thermal stress are applied to the boiler tube. The expansion force caused by thermal stress indicates a force in a direction from a central axis of the boiler tube 100 toward a peripheral surface of the boiler tube. The bending force indicates a force with which the boiler tube 100 is to bend in any direction vertical to a longitudinal direction (X-direction) of the boiler tube 100. The twisting force indicates a force in a direction of the peripheral surface . Then, as illustrated in FIGS. 3 to 10, the reinforcement device 10 includes a steel strip 11 and a reinforcement member 12. The reinforcement device 10 is provided such that the steel strip 11 is wound around the boiler tube 100 and further the boiler tube 100 is covered with the reinforcement member 12 over the steel strip 11. Here, being wound indicates being wound in a region corresponding to one turn on a peripheral surface (360 degrees about the central axis), in the peripheral surface furthest from the central axis in a cross section (YZ-plane) of the boiler tube 100. The same applies to the following description.

### <<Steel Strip 11>>

The steel strip 11 according to the first embodiment will be described with reference to FIGS. 3, 4, and 5.

The steel strip 11 is a member to be wound around the boiler tube 100 so as to reinforce the weld portion 102, for example, against thermal stress. The steel strip 11 is, for example, a member to minimize particularly the expansion force and the twisting force among the forces caused by the thermal stress generated in the boiler tube 100 in a state where the steel strip 11 has been wound on the outer peripheral surface of the boiler tube 100. The steel strip 11 is, for example, belt- shaped and have a width of about 3 cm and a thickness of about 0.3 mm, and is made of heat-resistant steel (for example, stainless steel SUS316, SUS304).

As illustrated in FIGS. 3 and 4, the steel strip 11 is wound on the outer peripheral surface of the boiler tube 100 so as to straddle the weld portion 102 of the boiler tube 100. As illustrated in FIG. 5, the steel strip 11 is, for example, wound so as to be arranged in parallel, while being shifted in the longitudinal direction (X-direction) of the boiler tube 100 so as not to create unevenness. Further, the steel strip 11 is laminated in a direction away from the central axis of the boiler tube 100. That is, the steel strip 11 makes surface contact with the outer peripheral surface of the boiler tube 100, and is wound in parallel and multiple manner. Further, the steel strip 11 is spot-welded and fixed at welding points 11A in order to fix such a laminated state. Note that FIG. 5 is a diagram illustrating a cross section of the steel strip 11 when the boiler tube 100 in FIG. 4 is cut along the XZ plane.

As described above, the steel strip 11 is in surface contact with the outer peripheral surface of the boiler tube 100 and is wound in parallel. This can minimize the expansion force caused by thermal stress . Further, the steel strip 11 is welded to the boiler tube 100 and the steel strip 11 is also welded between the upper and lower sides thereof where the parts of the steel strip 11 are laminated. This can minimize the twisting force caused by thermal stress. As illustrated in FIG. 5, however, the parts of the steel strip 11 are not welded in a direction along the X-axis. As a consequence, the bending force caused by thermal stress may not be able to be minimized. This makes it difficult to sufficiently reinforce the boiler tube 100 with the use of the steel strip 11 alone. Accordingly, the reinforcement device 10 is configured such that the reinforcement member 12, which will be described later, is further mounted to cover the steel strip 11 from above, so as to be able to minimize the bending force caused by thermal stress, against which reinforcement is not sufficient with the steel strip 11 alone.

In the above description, the steel strip 11 has been described as being wound in parallel so as not to form unevenness, but it is not limited thereto. For example, the steel strip 11 may be wound in parallel such that parts of the steel strip 11 adjacent to each other along the X-axis overlap each other or the steel strip 11 may be wound with a slight gap between the parts of the steel strip 11. Further, in the above description, the steel strip 11 has been described as being wound in a multiple manner so as to be laminated, but it is not limited thereto . For example, the steel strip 11 may be wound in one layer. Further, in the above description, the steel strip 11 is described as having a width of about 3 cm and a thickness of about 0.3 mm, but it is not limited thereto. The width and the thickness of the steel strip 11 are not to be limited, but these numerical values are preferable values based on the result of design. Further, in the above description, the steel strip 11 is described as being made of a stainless steel material, but it is not limited thereto. For example, any material may be used as long as the material is higher in strength against stress than the material of the boiler tube 100 and is stable against corrosion.

### <<Reinforcement Member 12>>

The reinforcement member 12 according to the first embodiment will be described with reference to FIGS. 6, 7, 8, 9, and 10.

The reinforcement member 12 is a member to reinforce the boiler tube 100 such that the reinforcement member 12 is disposed onto the boiler tube 100 where the steel strip 11 wound therearound, so as to cover a region including the steel strip 11. The reinforcement member 12 includes a first reinforcement member 12A and a second reinforcement member 12B.

The first reinforcement member 12A is made of heat-resistant steel (for example, stainless steel SUS316 and SUS304). The first reinforcement member 12A has a semi-cylinder shape so as to be in surface contact with the steel strip 11 disposed on an upper (+Z-side) half circumference of the straight portion 101 assuming that the straight portion 101 is cut along an XY-plane, formed with the X- and Y-axes, passing through the central axis of the straight portion 101. The first reinforcement member 12A has a length in a direction along the X-axis that is, for example, about twice to seven times, preferably six to seven times, the diameter of the straight portion 101, so that creep-fatigue damage and stress corrosion cracking (SCC) according to thermal stress are not easily generated in the straight portion 101. The first reinforcement member 12A has a thickness that decreases from the center of the first reinforcement member 12A toward both ends in the direction along the X-axis, so as to prevent the thermal stress from concentrating on both the ends in the direction along the X-axis. In particular, the first reinforcement member 12A has a constant thickness near the center of the first reinforcement member 12A in the direction along the X-axis, while the thickness gradually decreases, at a constant rate as in an outer peripheral surface of a cone, from positions away from the center of the first reinforcement member 12A toward both the ends. It is assumed that the constant rate is set to, for example, about a rate at which the thickness decreases by approximately 5 mm with respect to a length of 100 mm in the direction along the X-axis. It is also assumed that the thickness on both the ends of the first reinforcement member 12A is, for example, approximately 5 mm. Further, the thickness near the center of the first reinforcement member 12A is set to, for example, 1/4 or more of the thickness of the boiler tube.

The first reinforcement member 12A is provided with first flanges 13 in the direction along the X-axis on both sides (±Y-sides) along a direction of the Y-axis. The first flanges 13 are made of heat-resistant steel (for example, stainless steel SUS316 and SUS304), and each have, for example, a long flat plate shape. The first flanges 13 include a plurality of first holes 14 drilled at substantially regular intervals in the direction along the X-axis. The first flanges 13 are integrally provided to the first reinforcement member 12A by a welding process.

The second reinforcement member 12B is made of heat-resistant steel (for example, stainless steel SUS316 and SUS304). The second reinforcement member 12B has a semi-cylinder shape so as to make surface contact with the steel strip 11 disposed on a lower (-Z-side) half circumference of the straight portion 101 assuming that the straight portion 101 is cut along the XY-plane, formed with the X- and the Y-axes, passing through the central axis of the straight portion 101. The second reinforcement member 12B has a length in the direction along the X-axis that is set to, for example, about twice to seven times, preferably six to seven times, the diameter of the straight portion 101, so that creep-fatigue damage and stress corrosion cracking according to thermal stress are not easily generated in the straight portion 101. The second reinforcement member 12B has a thickness that decreases from the center of the second reinforcement member 12B toward both the ends in the direction along the X-axis, so as to prevent the thermal stress from concentrating on both the ends in the direction along the X-axis . In particular, the second reinforcement member 12B has a constant thickness near the center of the second reinforcement member 12B in the direction along the X-axis, while the thickness gradually decreases, at a constant rate as in an outer peripheral surface of a cone, from positions away from the center of the second reinforcement member 12B toward both the ends. It is assumed that the constant rate is set to about a rate at which the thickness decreases by approximately 5 mm with respect to a length of 100 mm in the direction along the X-axis. It is also assumed that the thickness on both the ends of the second reinforcement member 12B is set to, for example, approximately 5 mm. Further, the thickness near the center of the second reinforcement member 12B is set to, for example, 1/4 or more of the thickness of the boiler tube.

The second reinforcement member 12B is provided with second flanges 15 in the direction along the X-axis on both sides (±Y-sides) along the direction of the Y-axis. The second flanges 15 are made of heat-resistant steel (for example, stainless steel SUS316 and SUS304), and each have a long flat plate shape. The second flanges 15 include a plurality of second holes 16 drilled at substantially regular intervals in the direction along the X-axis. The second flanges 15 are integrally provided to the second reinforcement member 12B by a welding process.

As apparent from the above description, the first reinforcement member 12A and the second reinforcement member 12B have symmetrical shapes when the straight portion 101 is disposed between the members 12A and 12B in such a manner as to be sandwiched therebetween. Accordingly, when the first flanges 13 and the second flanges 15 are respectively aligned in a state where the first reinforcement member 12A and the second reinforcement member 12B are disposed symmetrically with respect to the straight portion 101 serving as a border, inner peripheral surfaces (surfaces on concaved sides) of the first reinforcement member 12A and the second reinforcement member 12B are brought into surface contact with the steel strip 11 wound around the straight portion 101, such that the plurality of first holes 14 and the plurality of second holes 16 are respectively aligned without being displaced to one another. Then, after a plurality of bolts 17 are respectively inserted into the plurality of first holes 14 and the plurality of second holes 16, a plurality of nuts 18 are threadedly engaged with the plurality of bolts 17, respectively, to be tightened. This brings a state where the first reinforcement member 12A and the second reinforcement member 12B are fitted tightly around the steel strip 11. Note that an inner diameter formed by assembling the first reinforcement member 12A and the second reinforcement member 12B is maintained constant.

When the boiler 502 is activated, high temperature and high pressure steam flows through the straight portion 101, and when the boiler 502 is halted, the high temperature and high pressure steam flowing through the straight portion 101 stops flowing. The activation and halt of the boiler 502 create the thermal stress on the straight portion 101. Furthermore, the continuation of the activation and halt in the boiler 502 over a long period of time may cause the creep-fatigue damage on the straight portion 101, or the stress corrosion cracking in the proximity of the weld portion 102, according to the expansion force, bending force, and twisting force caused by the thermal stress. However, the employment of the reinforcement device 10 according to the first embodiment can minimize creation of creep-fatigue damage and stress corrosion cracking on the straight portion 101, thereby being able to increase the remaining life of the boiler tube 100. The first reinforcement member 12A and the second reinforcement member 12B are mounted to the straight portion 101 using the bolts 17 and the nuts 18. This enables the reinforcement device 10 to be easily mounted to the straight portion 101. The degree of tightness in the bolts 17 and the nuts 18 can be adjusted according to type (material) of the boiler tube 100 and usage environment. This can appropriately minimize creation of creep-fatigue damage and stress corrosion cracking on the straight portion 101, thereby being able to increase the remaining life of the boiler tube 100.

The first flanges 13, the second flanges 15, the bolts 17, and the nuts 18 are disposed as means to mount the first reinforcement member 12A and the second reinforcement member 12B to the straight portion 101, however, it is not limited thereto. For example, as an alternative to the first flanges 13, the second flanges 15, the bolts 17, and the nuts 18, a copper band-shaped bar (not illustrated) can be prepared and wound on the first reinforcement member 12A and the second reinforcement member 12B over the entire peripheral area, thereby being able to mount the first reinforcement member 12A and the second reinforcement member 12B to the straight portion 101.

### ===Second Embodiment===

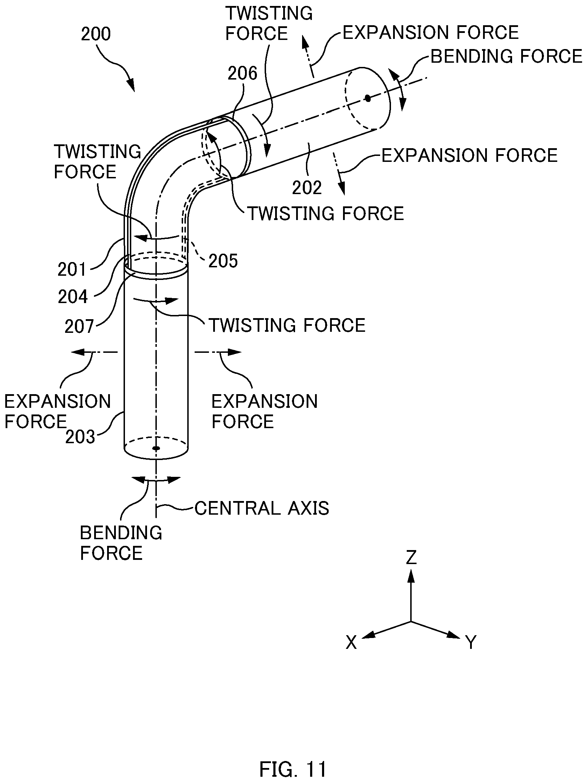

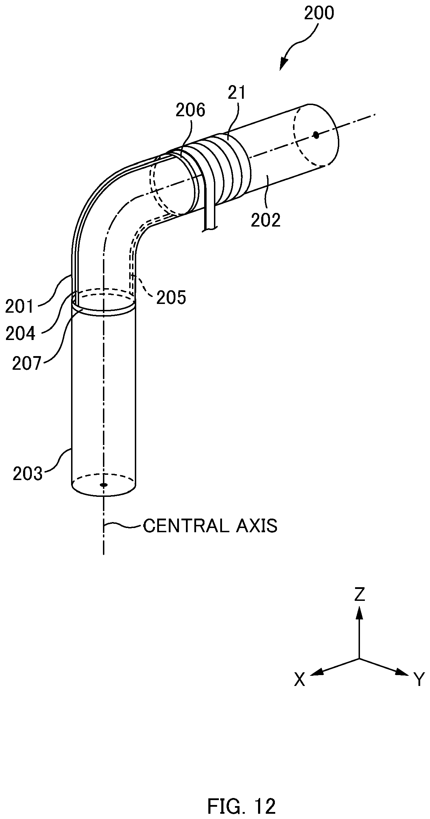

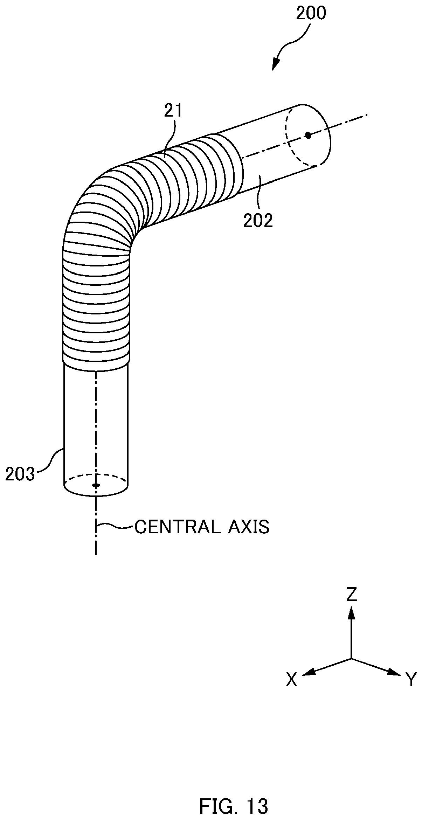

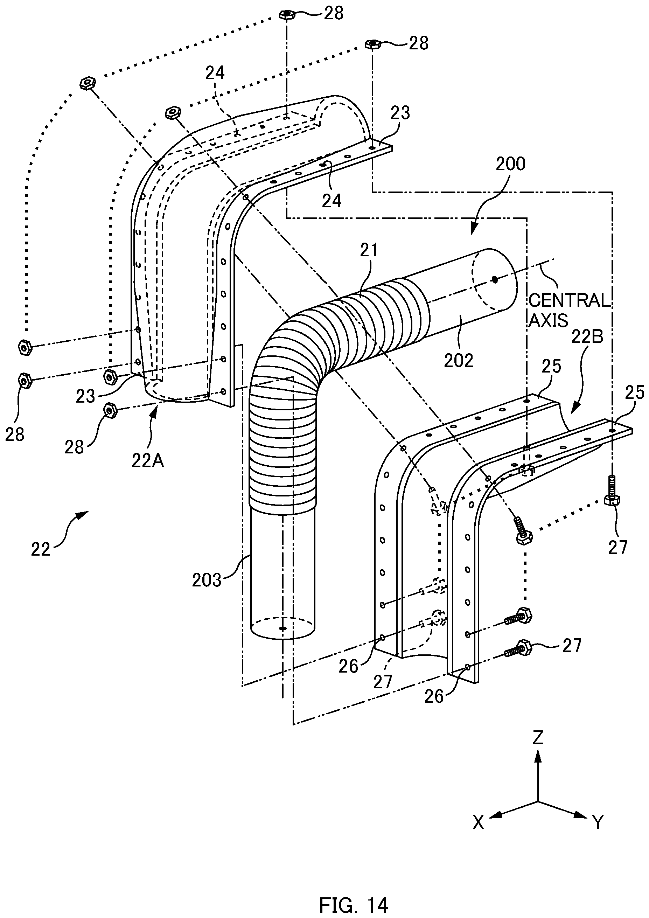

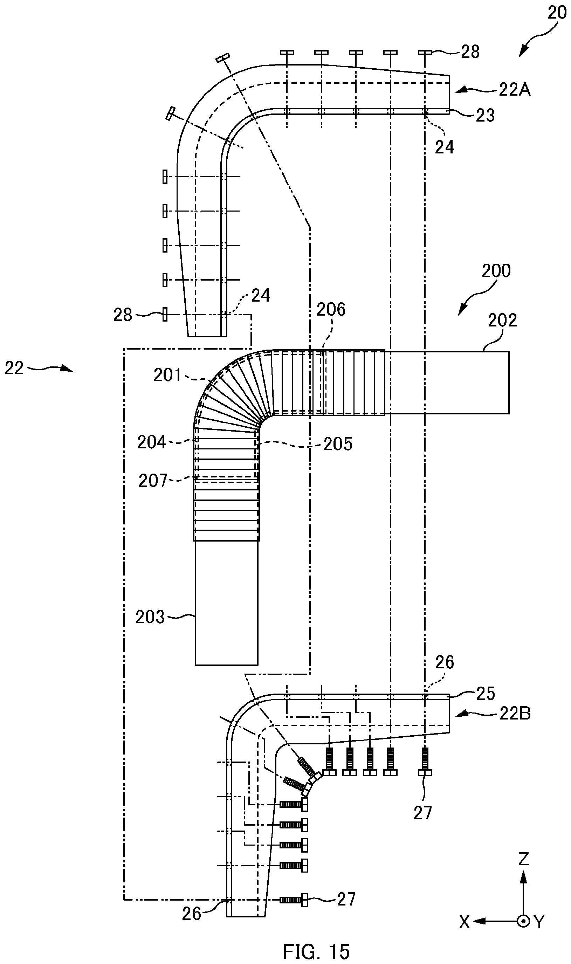

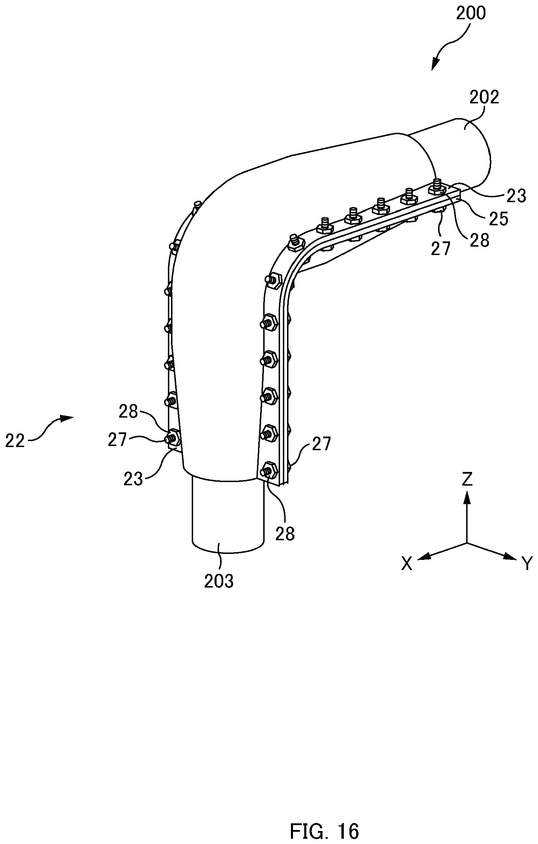

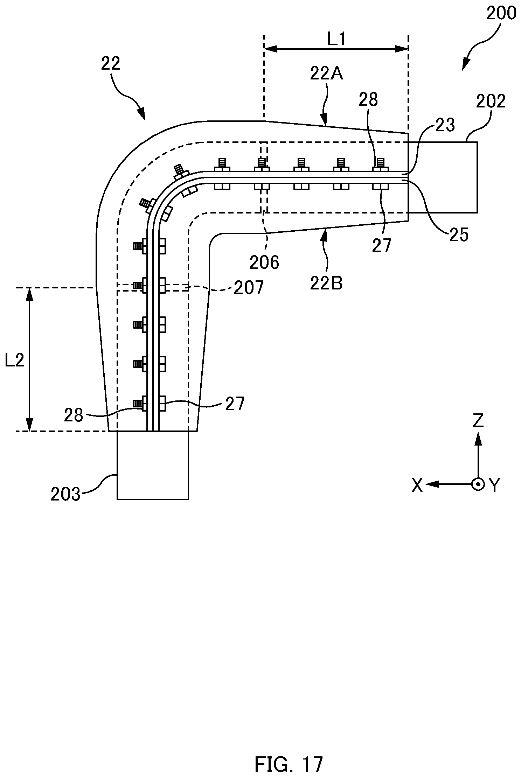

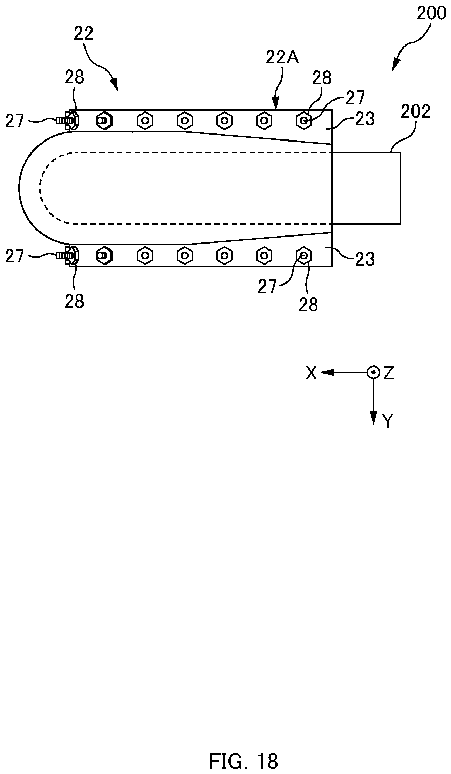

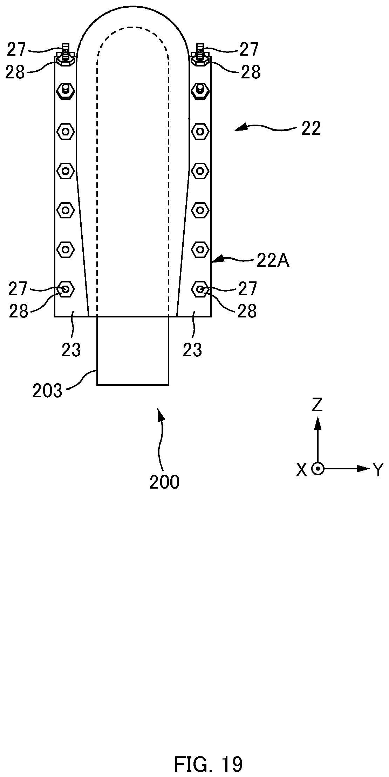

FIG. 11 is a perspective view illustrating an example of thermal stress and an elbow portion of a boiler tube according to a second embodiment. FIG. 12 is a perspective view illustrating an example when a steel strip is wound on a weld portion according to the second embodiment. FIG. 13 is a perspective view illustrating an example of a state where the steel strip has been wound on the weld portion according to the second embodiment. FIG. 14 is an exploded perspective view illustrating a state before a reinforcement member according to the second embodiment is mounted to the elbow portion of the boiler tube. FIG. 15 is a plan view illustrating a state before the reinforcement member according to the second embodiment is mounted to the elbow portion of the boiler tube. FIG. 16 is a perspective view illustrating a state after the reinforcement member according to the second embodiment has been mounted to the elbow portion of the boiler tube. FIG. 17 is a plan view illustrating a state after the reinforcement member according to the second embodiment has been mounted to the elbow portion of the boiler tube. FIG. 18 is another plan view illustrating a state after the reinforcement member according to the second embodiment has been mounted to the elbow portion of the boiler tube. FIG. 19 is still another plan view illustrating a state after the reinforcement member according to the second embodiment has been mounted to the elbow portion of the boiler tube. Note that an X-axis is an axis along a longitudinal direction of one straight portion coupled to the elbow portion by a welding process, a Z-axis is an axis along a longitudinal direction of the other straight portion coupled to the elbow portion by a welding process, and a Y-axis is an axis perpendicular to an XZ-plane formed with the X-axis and the Z-axis.

Hereinafter, a reinforcement device 22 according to the second embodiment will be described with reference to FIGS. 11 to 19.

The reinforcement device 20 according to the second embodiment is a device configured to reinforce mainly an elbow portion 201 of a boiler tube 200 included in the steam generator 503 or the reheater 509 illustrated in FIG. 1. The boiler tube 200 is made of heat-resistant steel (for example, low-alloy steel, high-alloy steel, carbon steel, and stainless steel), and the elbow portion 201 has, for example, such a shape that a cylinder is bent in an L shape. The boiler tube 200 to which the reinforcement device 20 is mounted includes as portions thereof : the elbow portion 201; a part of a straight portion 202 on the side closer to the elbow portion 201; a part of a straight portion 203 on the side closer to the elbow portion 201; weld portions 204 and 205 created as a result of a welding process performed on one half piece (-Y-side) and the other half piece (+Y-side) when the elbow portion 201 is cut along the XZ-plane, formed with the X- and Z-axes, passing through the central axis of the elbow portion 201; a weld portion 206 created as a result of the welding process performed on cross-section openings of the elbow portion 201 and the straight portion 202; and a weld portion 207 created as a result of the welding process performed on cross-section openings of the elbow portion 201 and the straight portion 203. Further, the reinforcement device 20 includes a steel strip 21, a first reinforcement member 22A and a second reinforcement member 22B that are to be fitted tightly around an outer peripheral surface of the elbow pipe 201 and the straight portions 202 and 203. Note that, as illustrated in FIG. 11, expansion force, bending force, and twisting force caused by thermal stress are applied to the boiler tube. The expansion force caused by thermal stress indicates a force in a direction from a central axis of the boiler tube 200 toward a peripheral surface of the boiler tube. The bending force indicates a force with which the boiler tube 200 is to bend in any direction vertical to a longitudinal direction (X-direction) of the boiler tube 200. The twisting force indicates a force in a direction of the peripheral surface.

### <<Steel Strip 21>>

The steel strip 21 according to the second embodiment will be described with reference to FIGS. 12 and 13. Note that, in the description of the steel strip 21 according to the second embodiment, only portions that are different from the steel strip 11 according to the first embodiment will be described, while the matters not described are considered as being similar to those in the steel strip 11 according to the first embodiment and descriptions thereof are omitted.

As illustrated in FIGS. 12 and 13, the steel strip 21 is wound on the outer peripheral surface of the boiler tube 200 so as to straddle the weld portions 206, 207 of the boiler tube 200 and intersect the weld portions 204, 205. For example, in the straight portions 202, 203, the steel strip 21 is wound so as to be arranged in parallel, while being shifted in the longitudinal direction of the boiler tube 200 so as not to create unevenness (see FIG. 5). On the other hand, in the inner portion (downward in the drawing) of a bend of the elbow portion 201, the steel strip 21 is wound such that the parts of the steel strip 21 adjacent to each other overlap with each other. Further, in the outer portion (upward in the drawing) of the bend of the elbow portion 201, the steel strip 21 is wound to be arranged in parallel so as not to create unevenness between the parts of the steel strip 21 adjacent to each other or the steel strip 21 is wound such that the parts of the steel strip 21 overlap less than the parts thereof in the inner portion (downward in the drawing) . This is to increase the contact area between the steel strip 21 and the boiler tube 200 as much as possible, to enhance reinforcement strength. Furthermore, the steel strip 21 is laminated in a direction away from the central axis of the boiler tube 200. That is, the steel strip 21 is in surface contact with the boiler tube 200, and is wound in parallel in a multiple manner. Further, the steel strip 21 is spot-welded and fixed at the welding points 11A to fix such a laminated state (see FIG. 5).

As described above, the steel strip 21 is in surface contact with the boiler tube 200 and is wound in parallel. This can minimize the expansion force caused by thermal stress. Further, the steel strip 21 is welded to the boiler tube 200 and the parts of the steel strip 21 are also welded to each other between the upper and lower sides where laminated. This can minimize the twisting force caused by thermal stress. With respect to the bending force of the boiler tube 200, however, since the parts of the steel strip 21 are not welded in the direction with respect to the X-axis (see FIG. 5), the bending force may not be able to be minimized. This makes it difficult to sufficiently reinforce the boiler tube 200, using the steel strip 21 alone. Accordingly, the reinforcement device 20 is configured such that the reinforcement member 22, which will be described later, is further mounted to the outer peripheral surface of the steel strip 21, so as to be able to minimize thermal stress with respect to the bending force.

### <<Reinforcement Member 22>>

The reinforcement member 22 according to the second embodiment will be described with reference to FIGS. 14, 15, 16, 17, 18, and 19.

The reinforcement member 22 is a member to reinforce the boiler tube 200 such that the reinforcement member 22 is disposed onto the boiler tube 200 where the steel strip 21 is wound therearound, so as to cover a region including the steel strip 21. The reinforcement member 22 includes a first reinforcement member 22A and a second reinforcement member 22B.

The first reinforcement member 22A is made of heat-resistant steel (for example, stainless steel SUS316 and SUS304). The first reinforcement member 22A has a shape in which a half cylinder is bent in an L shape so as to be in surface contact with a part of the outer peripheral surface corresponding to one semi-circumference (+X-side to +Z-side) of the steel strip 21 wound around the elbow portion 201 and the straight portions 202 and 203. Further, as illustrated in FIG. 17, the first reinforcement member 22A has a length L1, in the direction along the X-axis, of a part in surface contact with the steel strip 21 in the straight portion 202. The length L1 is set to, for example, about twice to seven times, preferably six to seven times, of the diameter of the straight portion 202, so that creep-fatigue damage and stress corrosion cracking according to the bending force and thermal stress are less likely to be created on the straight portion 202 continuous with the elbow portion 201. Similarly, the first reinforcement member 22A has a length L2, in the direction along the Z-axis, of a part in surface contact with the steel strip 21 in the straight portion 203. The length L2 is set to, for example, about twice to seven times, preferably six to seven times, of the diameter of the straight portion 203, so that creep-fatigue damage and stress corrosion cracking according to the bending force and thermal stress are less likely to be created on the straight portion 203 continuous with the elbow portion 201. The first reinforcement member 22A has a thickness at the part in surface contact with the steel strip 21 in the straight portion 202 that decreases with distance from the elbow portion 201 so as to prevent thermal stress from concentrating on an end (-X-side) in the direction along the X-axis. In particular, the first reinforcement member 22A has a thickness at the part in surface contact with the steel strip 21 in the straight portion 202 that gradually decreases, at a constant rate as in an outer peripheral surface of a cone, with distance from the elbow portion 201 in the direction along the X-axis. It is assumed that the constant rate is set to, for example, about a rate at which the thickness decreases by approximately 5 mm with respect to a length of 100 mm in the direction along the X-axis. Similarly, the first reinforcement member 22A has a thickness at the part in surface contact with the steel strip 21 in the straight portion 203 that decreases with distance from the elbow portion 201, so as to prevent thermal stress from concentrating on an end (-Z-side) in the direction along the Z-axis. In particular, the first reinforcement member 22A has a thickness at the part in surface contact with the steel strip 21 in the straight portion 203 that gradually decreases, at a constant rate as in an outer peripheral surface of a cone, with distance from the elbow portion 201 in the direction along the Z-axis. It is assumed that the constant rate is set to about a rate at which the thickness decreases by approximately 5 mm with respect to a length of 100 mm in the direction along the Z-axis. It is also assumed that the thickness on both the ends of the first reinforcement member 22A is set to approximately 5 mm.

The first reinforcement member 22A includes first flanges 23 in the direction of the Y-axis on both sides (±Y-sides) so as to be disposed along the bent shape of the first reinforcement member 22A. The first flanges 23 are made of heat-resistant steel (for example, stainless steel SUS316 and SUS304), and each have, for example, a shape in which a long flat plate is bent in an L shape so as to be along the bent shape of the first reinforcement member 22A. The first flanges 23 include a plurality of first holes 24 drilled at substantially regular intervals in the longitudinal direction. The first flanges 23 are integrally disposed to the first reinforcement member 22A by the welding process.

The second reinforcement member 22B is, similarly, made of heat-resistant steel (for example, stainless steel SUS316 and SUS304). The second reinforcement member 22B has a shape in which a half cylinder is bent in an L shape so as to be in surface contact with a part of the outer peripheral surface corresponding to the other (-X-side to -Z-side) semi-circumference of the steel strip 21 wound around the elbow portion 201 and the straight portions 202 and 203. The second reinforcement member 22B has a length L1' in the direction along the X-axis at the part in surface contact with the steel strip 21 in the straight portion 202. The length L1' is set to, for example, a length (L1 = L1') of about twice to seven times, preferably six to seven times, the diameter of the straight portion 202, so that creep-fatigue damage and stress corrosion cracking according to the bending force and thermal stress are less likely to be created on the straight portion 202 continuous with the elbow portion 201. Similarly, the second reinforcement member 22B has a length L2' in a direction along the Z-axis at the part in surface contact with the steel strip 21 in the straight portion 203. The length L2' is, for example, at a length (L1 = L1') of about twice to seven times, preferably six to seven times, the diameter of the straight portion 203, so that creep-fatigue damage and stress corrosion cracking according to bending stress and thermal stress are less likely to be created on the straight portion 203 continuous with the elbow portion 201. The second reinforcement member 22B has a thickness at the part in surface contact with the steel strip 21 in the straight portion 202 that decreases with distance from the elbow portion 201 so as to prevent thermal stress from concentrating on an end (-X-side) in the direction along the X-axis. In particular, the second reinforcement member 22B has a thickness at the part in surface contact with the steel strip 21 of the straight portion 202 that gradually decreases, at a constant rate as in an outer peripheral surface of a cone, with distance from the elbow portion 201 in the direction along the X-axis. It is assumed that the constant rate is set to about a rate at which the thickness decreases by approximately 5 mm with respect to a length of 100 mm in the direction along the X-axis. Similarly, the second reinforcement member 22B has a thickness at the part in surface contact with the straight portion 203 that decreases with distance from the elbow portion 201 so as to prevent thermal stress from concentrating on an end (-Z-side) in the direction along the Z-axis. In particular, the second reinforcement member 22B has a thickness at the part in surface contact with the steel trip 21 in the straight portion 203 that gradually decreases, at a constant rate as in an outer peripheral surface of a cone, with distance from the elbow portion 201 in the direction along the Z-axis. It is assumed that the constant rate is set to about a rate at which the thickness decreases by approximately 5 mm with respect to a length of 100 mm in the direction along the Z-axis. It is also assumed that the thickness on both the ends of the second reinforcement member 22B is set to approximately 5 mm.

The second reinforcement member 22B includes second flanges 25 in the direction of the Y-axis on both sides (±Y-sides) so as to be disposed along the bent shape of the second reinforcement member 22B. The second flanges 25 are made of heat-resistant steel (for example, stainless steel SUS316 and SUS304), and each have, for example, a shape in which a long flat plate is bent in an L shape so as to be along the bent shape of the second reinforcement member 22B. The second flanges 25 include a plurality of second holes 26 drilled at substantially regular intervals along the longitudinal direction. The second flanges 25 are integrally disposed to the second reinforcement member 22B by the welding process.

As apparent from the above description, when the first flanges 23 and the second flanges 25 are aligned via the elbow portion 201, the first reinforcement member 22A and the second reinforcement member 22B form such a shape that the first and second reinforcement members 22A and 22B are fitted tightly around the steel strip 21 that is wound around the elbow portion 201. That is, when the first flanges 23 and the second flanges 25 are aligned in a state where the first reinforcement member 22A and the second reinforcement member 22B are disposed so as to sandwich the elbow portion 201 and the steel strip 21, inner peripheral surfaces (surfaces on concaved sides) of the first reinforcement member 22A and the second reinforcement member 22B make surface contact with the steel strip 21 wound around the elbow portion 201, such that the plurality of first holes 24 and the plurality of second holes 26 are aligned without being displaced to one another. Then, after a plurality of bolts 27 are inserted into the plurality of first holes 24 and the plurality of second holes 26, a plurality of nuts 28 are threadedly engaged with the plurality of bolts 27 to be tightened. This brings a state where the first reinforcement member 22A and the second reinforcement member 22B are fitted tightly around the steel strip 21 of the elbow portion 201. Note that an inner diameter of the reinforcement device 20 formed by assembling the first reinforcement member 22A and the second reinforcement member 22B is maintained constant.

The employment of the reinforcement device 20 according to the second embodiment can minimize creation of creep-fatigue damage and stress corrosion cracking on the elbow portion 201 and the straight portions 202 and 203 continuous with the elbow portion 201, thereby being able to increase the remaining life of the boiler tube 200. In particular, the elbow portion 201 includes four weld portions (weld portions 204 to 207) where creep-fatigue damage and stress corrosion cracking are considered to be easily created, and thus the employment of the reinforcement device 20 is greatly effective. Further, the first reinforcement member 22A and the second reinforcement member 22B are mounted to the elbow portion 201 using the bolts 27 and the nuts 28. This enables the reinforcement device 20 to be easily mounted to the elbow portion 201. Further, the degree of tightness in the bolts 27 and the nuts 28 can be adjusted according to type (material) of the boiler tube 200 and usage environment. This can appropriately restrain creation of creep-fatigue damage and stress corrosion cracking on the elbow portion 201, thereby being able to increase the remaining life of the boiler tube 200.

The first flanges 23, the second flanges 25, the bolts 27, and the nuts 28 are provided as means for mounting the first reinforcement member 22A and the second reinforcement member 22B to the elbow portion 201, however, it is not limited thereto. For example, as an alternative to the first flanges 23, the second flanges 25, the bolts 27, and the nuts 28, a copper band-shaped bar (not illustrated) can also be prepared and wound around the first reinforcement member 22A and the second reinforcement member 22B over the entire peripheral area, thereby being able to mount the first reinforcement member 22A and the second reinforcement member 22B mainly to the elbow portion 201.

Note that, in the above description, the first reinforcement member 22A is described as having a shape in which a half cylinder is bent in an L shape so as to be in surface contact with a part of the outer peripheral surface corresponding to one semi-circumference (+X-side to +Z-side) of the steel strip 21, while the second reinforcement member 22B is described as having a shape in which a half cylinder is bent in an L shape so as to be in surface contact with a part of the outer peripheral surface corresponding to the other semi-circumference (-X-side to -Z-side) of the steel strip 21, however, it is not limited thereto. For example, the first reinforcement member 22A may have a shape in which a half cylinder is bent in an L shape so as to be in surface contact with a part of the outer peripheral surface corresponding to one semi-circumference of the steel strip 21 (-Y-side when being split by the XZ plane passing through the central axis of the boiler tube 200), while the second reinforcement member 22B may have a shape in which a half cylinder is bent in an L shape so as to be in surface contact with a part of the outer peripheral surface corresponding to the other semi-circumference of the steel strip 21 (+Y-side when being split by the XZ plane passing through the central axis of the boiler tube 200). In this case, it is assumed that the first reinforcement member 22A is provided with the first flanges 23 on both sides along the XZ plane so as to follow the bent shape of the first reinforcement member 22A, while the second reinforcement member 22B is provided with the second flanges 25 on both sides along the XZ plane so as to follow the bent shape of the second reinforcement member 22B. That is, the first reinforcement member 22A and the second reinforcement member 22B are arranged such that the first flanges 23 and the second flanges 25 are aligned on the XZ plane via the elbow portion 201. As a consequence, the first reinforcement member 22A and the second reinforcement member 22B have the same shape, and thus manufacturing cost can be reduced.

### ===Third Embodiment===

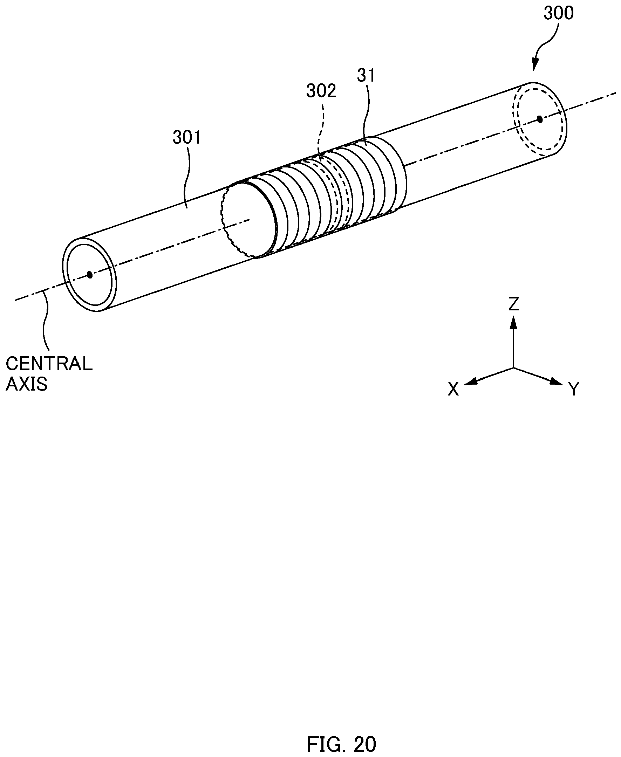

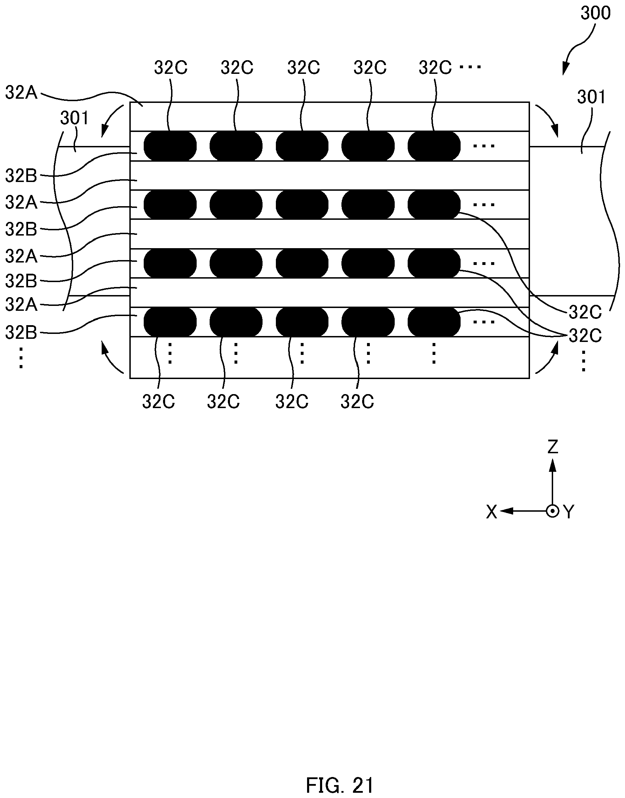

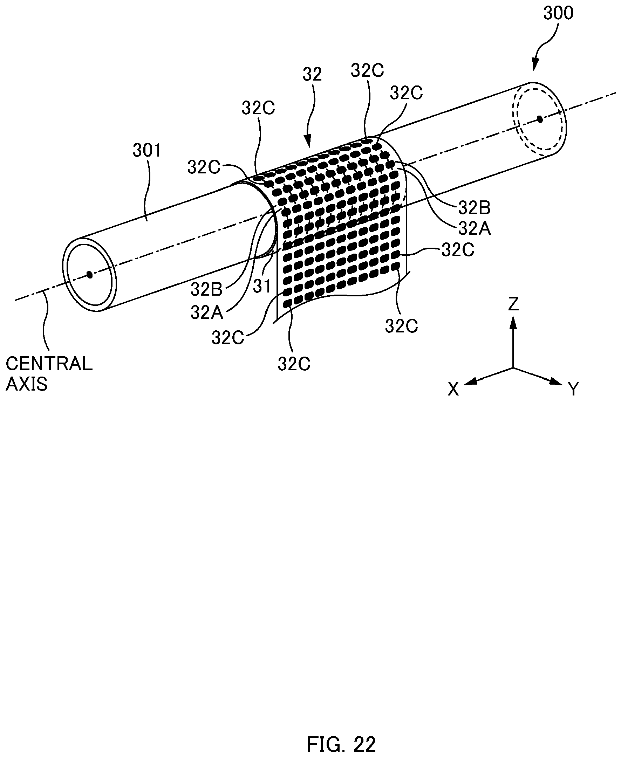

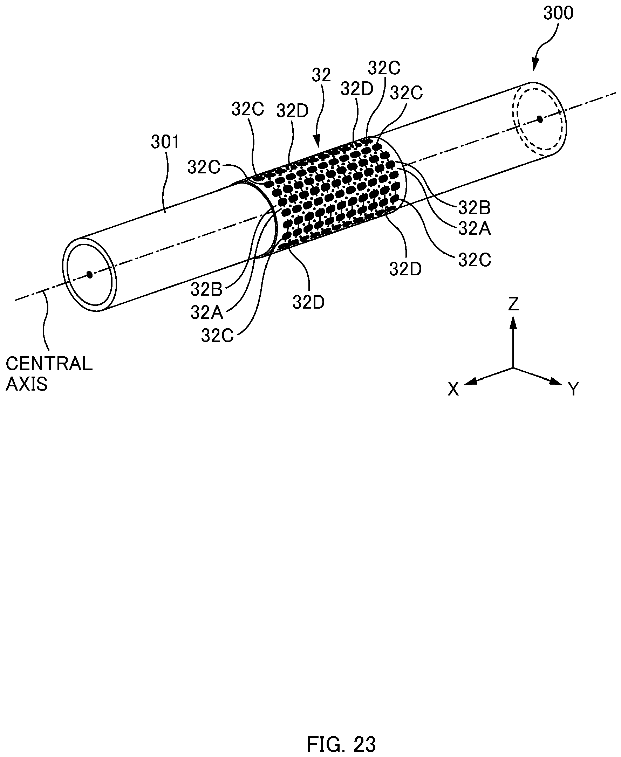

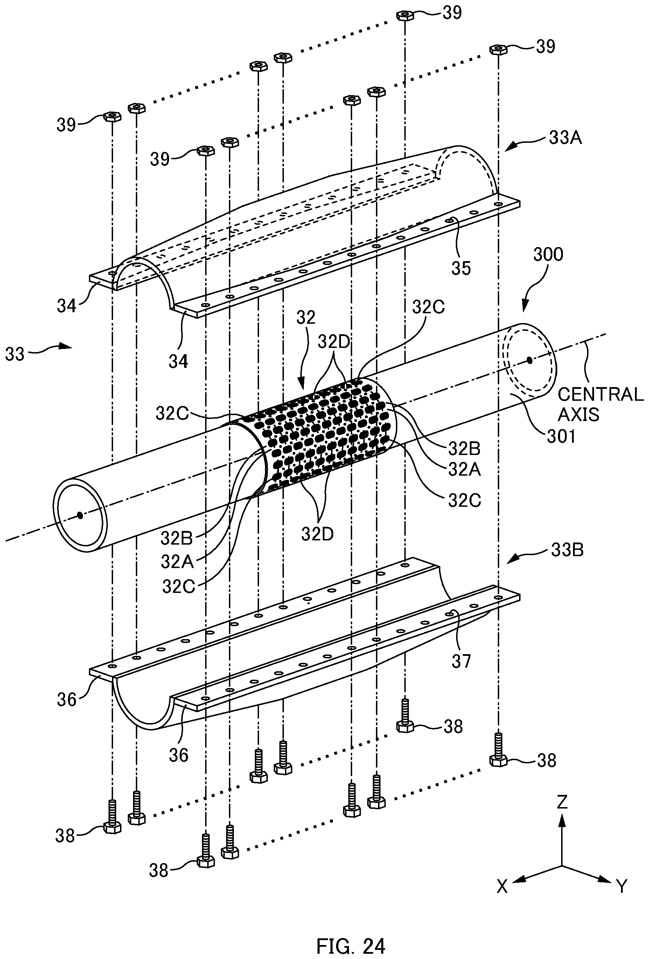

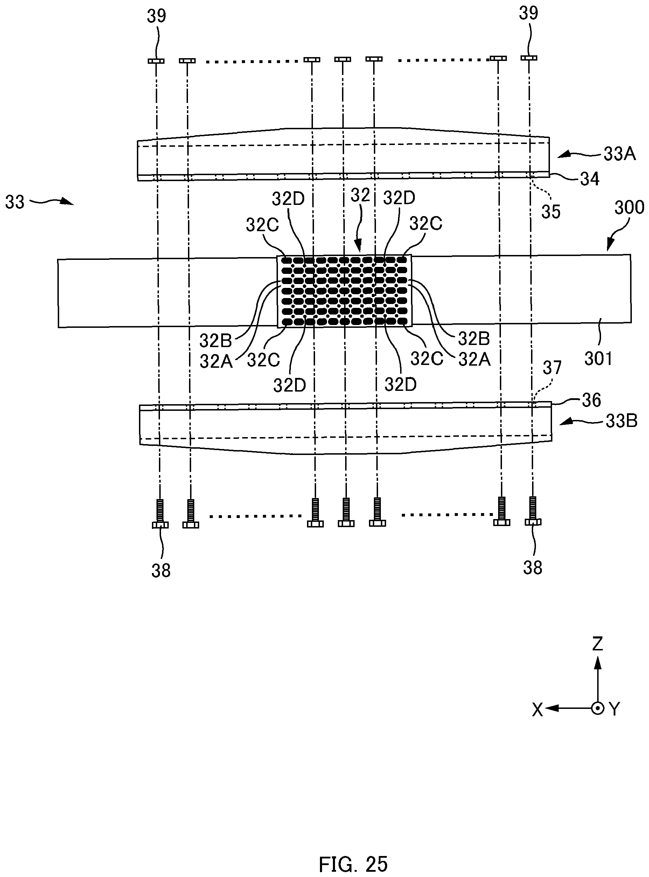

FIG. 20 is a perspective view illustrating an example of a state where a steel strip has been wound on a weld portion according to a third embodiment of the present disclosure. FIG. 21 is a plan view illustrating an example of a reinforcement steel plate according to the third embodiment. FIG. 22 is a perspective view illustrating an example when the reinforcement steel plate according to the third embodiment is wrapped over the steel strip. FIG. 23 is a perspective view illustrating an example of a state where the reinforcement steel plate according to the third embodiment has been wrapped. FIG. 24 is an exploded perspective view illustrating a state before the reinforcement member according to the third embodiment is mounted to a straight portion of a boiler tube. FIG. 25 is a plan view illustrating a state before the reinforcement member according to the third embodiment is mounted to a straight portion 301 of the boiler tube.

Hereinafter, the reinforcement device 30 according to the third embodiment will be described with reference to FIGS. 20, 21, 22, 23, 24, and 25. Note that, in the reinforcement device 10 according to the first embodiment, the reinforcement member 12 is mounted over the steel strip 11, whereas the reinforcement device 30 according to the third embodiment is configured such that a reinforcement steel plate (sheet) 32 is interposed between the steel strip 31 (the same as the steel strip 11) and the reinforcement member 33 (the same as reinforcement member 12) . Accordingly, in the following, descriptions of the steel strip 31 and the reinforcement member 33 according to the third embodiment are omitted as being the same as the steel strip 11 and the reinforcement member 12 in the first embodiment.

The reinforcing device 30 according to the third embodiment is mounted to a boiler tube 300 such that, in the state where the steel strip 31 is wound on a weld portion 302 provided in the straight portion 301 of a boiler tube 300 as illustrated in FIG. 20, the reinforcement steel plate 32, which will be described later, is wound over the steel strip 31 as illustrated in FIGS. 21 to 23, and further the reinforcement member 33 is provided so as to cover the reinforcement steel plate 32 as illustrated in FIG. 24. In other words, as compared with the reinforcement device 10 according to the first embodiment, the reinforcement device 30 according to the third embodiment has an effect of further minimizing the bending force, by an amount corresponding to the provision of the reinforcement steel plate 32. Note that descriptions of the expansion force, bending force, and twisting force caused by thermal stress that are to be applied to the boiler tube 300 are omitted as being the same as the expansion force, bending force, and twisting force caused by thermal stress that are applied to the boiler tube 100 illustrated in FIG. 2.

### <<Reinforcement Steel Plate 32>>

The reinforcement steel plate 32 will be described with reference to FIGS. 21, 22, and 23. Note that, for convenience of explanation, boundaries between thick steel portions 32A and thin steel portions 32B are depicted by solid lines in FIG. 21, while the boundaries are expressed without using the solid line in FIGS. 22 and 23, however, it is assumed that all the reinforcement steel plates 32 illustrated in FIGS. 21 to 23 are the same. Note that the above-mentioned solid lines are illustrated to aid understanding of the boundaries between the thick steel portions 32A and the thin steel portions 32B, and the lines do not actually exist.

The reinforcement steel plate 32 is, for example, a member to reinforce the weld portion 302 against thermal stress by being wrapped over the steel strip 31 that has been wound on the outer peripheral surface of the boiler tube 300. The reinforcement steel plate 32 is, for example, a member to minimize particularly the bending force among the forces caused by thermal stress generated in the boiler tube 300, in a state where the reinforcement steel plate 32 is wrapped over the steel strip 31 around the boiler tube 300. That is, the reinforcement steel plate 32 is a member to reinforce the boiler tube 300 with respect to the bending force, against which suppression is difficult with the steel strip 31, such that the reinforcement steel plate 32 is wrapped over the steel trip 31. Further, the steel strip 31 may be further wound over the reinforcement steel plate 32. This can enhance reinforcement effect of the reinforcement device 30. Furthermore, the reinforcement device 30 may be configured such that the steel strip(s) 31 and the reinforcement steel plate(s) 32 are alternately laminated.

The reinforcement steel plate 32 is, for example, sheet-shaped, and made of heat-resistant steel (for example, stainless steel SUS316 and SUS304). The size of the reinforcement steel plate 32 is not limited thereto, as long as the size is capable of covering a region including the steel strip 31. As illustrated in FIG. 21, the reinforcement steel plate 32 includes, for example, thick steel portions 32A and thin steel portions 32B (bend portions).

The thick steel portions 32A are, for example, portions to reinforce the boiler tube 300 against a bending force caused by thermal stress, so as to supplement the reinforcement effect of the steel strip 31 against thermal stress. As illustrated in FIG. 21, the thick steel portions 32A are formed along the longitudinal direction (X-direction) of the boiler tube 300 as well as formed at regular intervals along the circumferential direction of the boiler tube 300, in a state where the reinforcement steel plate 32 is mounted to the boiler tube 300. That is, the thick steel portions 32A are formed in a striped manner along the longitudinal direction (X-direction) of the boiler tube 300, in a state where the reinforcement steel plate 32 has been mounted to the boiler tube 300. If the thick steel portions 32A are too thick, the reinforcement steel plate 32 may not be welded to the steel strip 31. Whereas, if the thick steel portions 32A are too thin, the boiler tube 300 may not be reinforced against the bending force caused by the thermal stress. Accordingly, it is preferable that the thick steel portions 32A are thicker than the thin steel portions 32B, which will be described later, and have a thickness of, for example, about 0.3 mm. As a method of fixing the thick steel portions 32A to the steel strip 31, employed is, for example, a method of spot-welding at regular intervals from a surface opposite to the surface contacting the steel strip 31, in a state where the reinforcement steel plate 32 is wrapped over the steel strip 31. In specific, as illustrated in FIG. 23, the thick steel portions 32A and the steel strip 31 are fixed by spot welding at welding points 32D where the thick steel portions 32A and the steel strip 31 are in surface contact with each other. It is preferable that the welding points 32D are provided at regular intervals along the X-axis and along the peripheral surface, to reduce bias in thermal stress, and provided so as not to overlap with the holes 32C in the circumferential direction, to perform welding at a place having higher strength. As described above, the thick steel portions 32A are provided in the X-direction in a continuous manner in reinforcement steel plate 32, in order to supplement the reinforcement effects of the steel strip 31, with which suppression of the bending force is difficult since welding is not performed with respect to the X-direction, thereby being able to minimize the bending force.

The thin steel portions 32B are, for example, portions to facilitate wrapping when the reinforcement steel plate 32 is wrapped around the boiler tube 300. The thin steel portions 32B are, as illustrated in FIG. 21, formed along the longitudinal direction (X-direction) of the boiler tube 300 as well as formed at regular intervals along the circumferential direction of the boiler tube 300, in a state where the reinforcement steel plate 32 is mounted to the boiler tube 300. That is, the thin steel portions 32B are formed in a striped manner along the longitudinal direction (X-direction) of the boiler tube 300, in a state where the reinforcement steel plate 32 has been mounted to the boiler tube 300. If the thin steel portions 32B are too thick, the reinforcement steel plate 32 may not be bent flexibly, so that the reinforcement steel plate 32 may not be able to be wrapped around the boiler tube 300. Accordingly, it is preferable that the thin steel portions 32B have a thickness of, for example, about 0.3 mm or less. The thin steel portions 32B are provided with the holes 32C which will be described later.

The holes 32C are, for example, portions to facilitate wrapping when the reinforcement steel plate 32 is wrapped around the boiler tube 300. The holes 32C are portions provided in the thin steel portions 32B, so that the thin steel portions 32B are bent more flexibly. The holes 32C each have, for example, a substantially quadrangular shape with rounded corners. As illustrated in FIG. 21, the holes 32C are provided within the thin steel portions 32B, and the holes 32C are provided continuously at regular intervals along the longitudinal direction (X-direction) of the boiler tube 300. It is preferable that each interval between the holes 32C is as narrow as possible to facilitate flexibly bending at the thin steel portions 32B. Further, the size of the holes 32C is not limited thereto, as long as the holes 32C are provided within the range of the thin steel portions 32B.

As apparent from the above description, when the first flanges 34 and the second flanges 36 are respectively aligned in a state where the first reinforcement member 33A and the second reinforcement member 32B are disposed symmetrically with respect to the straight portion 301 serving as a border, inner peripheral surfaces (surfaces on concaved sides) of the first reinforcement member 33A and the second reinforcement member 33B are brought into surface contact with the steel strip 31 or the reinforcement steel plate 32 wound or wrapped around the straight portion 301, such that a plurality of first holes 35 and a plurality of second holes 37 are aligned without being displaced to one another. Then, after a plurality of bolts 38 are inserted into the plurality of first holes 35 and the plurality of second holes 37, a plurality of nuts 39 are threadedly engaged with the plurality of bolts 38 to be tightened. This brings a state where the first reinforcement member 33A and the second reinforcement member 33B are fitted tightly around the steel strip 11. Note that an inner diameter formed by assembling the first reinforcement member 33A and the second reinforcement member 33B is maintained constant.

In the above description, the reinforcement steel plate 32 is described as being wrapped over the steel strip 31, but it is not limited thereto. For example, the reinforcement steel plate 32 may be directly wrapped around the boiler tube 300, and welded and fixed at the thick steel portions 32A of the reinforcement steel plate 32. Further, in the above description, the reinforcement steel plate 32 is described as being made of a stainless steel material, but it is not limited thereto. For example, any material may be used, as long as it has higher strength against thermal stress and is more stable against corrosion than the material of the boiler tube 300. Further, in the above description, the thick steel portions 32A of the reinforcement steel plate 32 are described as having a thickness of about 0.3 mm, but it is not limited thereto. The thickness of the thick steel portions 32A is not limited thereto, as long as it ensures the strength to reinforce the boiler tube against the thermal stress. Further, in the above description, spot welding is performed at the thick steel portions 32A, but it is not limited thereto. For example, welding may be performed at the thin steel portions 32B. In the above description, the shape of the holes 32C is described as having a substantially quadrangular shape, but it is not limited thereto. For example, the shape may be oval, and the shape having rounded corners is preferable. Further, in the above description, the thin steel portions are provided with the holes 32C, but it is not limited thereto. For example, instead of the holes 32C, portions corresponding thereto may be formed to be thinner than their surroundings.

### ===Summary===

As has been described above, a reinforcement device (10, 20, 30) according to an embodiment of the present disclosure is a reinforcement device (10, 20, 30) configured to reinforce a boiler tube (100, 200, 300) including a weld portion (102, 204 to 207, 302), the reinforcement device comprising: a strip-shaped steel strip (11, 21, 31) configured to be wound and fixed by welding in a region including the weld portion (102, 204 to 207, 302) of the boiler tube (100, 200, 300) ; a first reinforcement member (12A, 22A, 33A) having a shape to be in surface contact with an outer peripheral surface corresponding to one semi-circumference of the boiler tube (100, 200, 300) in an outer peripheral surface of the steel strip (11, 21, 31) wound around the boiler tube (100, 200, 300) ; a second reinforcement member (12B, 22B, 33B) having a shape to be in surface contact with an outer peripheral surface corresponding to another semi-circumference of the boiler tube (100, 200, 300) in the outer peripheral surface of the steel strip (11, 21, 31) wound around the boiler tube (100, 200, 300), the second reinforcement member being configured to cover the outer peripheral surface of the steel strip (11, 21, 31) together with the first reinforcement member (12A, 22A, 33A); and a coupling member (flanges, a copper band-shaped bar, or the like) configured to couple the first reinforcement member (12A, 22A, 33A) and the second reinforcement member (12B, 22B, 33B) together around the boiler tube (100, 200, 300). According to an embodiment of the present disclosure, it is possible to reinforce the boiler tube against thermal stress, thereby being able to minimize creep-fatigue damage of the boiler tube (100, 200, 300). This can increase a life of the boiler tube (100, 200, 300), and enhance safety of a thermal power plant 501.

Further, in the reinforcement device (10, 20, 30) according to an embodiment of the present disclosure, the first reinforcement member (12A, 22A, 33A) and the second reinforcement member (12B, 22B, 33B) each have a thickness that decreases at a constant rate toward bothends along the longitudinal direction of the boiler tube (100, 200, 300). According to an embodiment of the present disclosure, it is possible to minimize cracking at both the ends.

Further, in the reinforcement device 20 according to an embodiment of the present disclosure, when the first reinforcement member 22A and the second reinforcement member 22B are used to reinforce an elbow portion 201 of the boiler tube 200, the first reinforcement member 22A and the second reinforcement member 22B each have a length, along the longitudinal direction of the boiler tube200, set to be longer than a length of the elbow portion 201. According to an embodiment of the present disclosure, it is possible to reinforce also the elbow portion 201 of the boiler tube 200 against thermal stress. This can expand a range in which creep-fatigue damage can be minimized, thereby being able to enhance safety of a power plant.

Further, in the reinforcement device (10, 20, 30) according to an embodiment of the present disclosure, the coupling member includes: first flanges (13, 23, 34) disposed, on both sides of the first reinforcement member (12A, 22A, 33A), along the longitudinal direction of the boiler tube (100, 200, 300), the first flanges (13, 23, 34) having a plurality of first holes (14, 24, 35); second flanges (15, 25, 36) disposed, on both sides of the second reinforcement member (12B, 22B, 33B), along the longitudinal direction of the boiler tube (100, 200, 300), the second flanges (15, 25, 36) having a plurality of second holes (16, 26, 37); a plurality of bolts (17, 27, 38) to be inserted into the plurality of first holes (14, 24, 35) and the plurality of second holes (16, 26, 37) in a state where the first flanges (13, 23, 34) and the second flanges (15, 25, 36) are respectively aligned; and a plurality of nuts (18, 28, 39) to be threadedly engaged with the plurality of bolts (17, 27, 38). According to an embodiment of the present disclosure, it is possible to facilitate work to mount the reinforcement device, thereby being able to facilitate work efficiency.

Further, the reinforcement device 30 according to an embodiment of the present disclosure, further comprises: a sheet-shaped reinforcement steel plate 32, the reinforcement steel plate 32 being configured to be interposed between the steel strip 31 and the first and second reinforcement members 33A, 33B and wrapped around the boiler tube 300, wherein the reinforcement steel plate 32 includes a plurality of thin steel portions 32B, the plurality of thin steel portions 32B being formed along the longitudinal direction of the boiler tube 300 as well as formed at regular intervals along a circumferential direction of the boiler tube 300, so that the reinforcement steel plate 32 is easily wrapped around the boiler tube 300. According to an embodiment of the present disclosure, it is possible to further reinforce the boiler tube against the bending force caused by thermal stress. This can minimize creep-fatigue damage of the boiler tube, and increase a life of the boiler tube, thereby being able to enhance safety of a power plant.

Further, in the reinforcement device 30 according to an embodiment of the present disclosure, the thin steel portions 32B in the reinforcement steel plate 32 each includes a plurality of holes 32C, the holes 32C being formed at regular intervals along the longitudinal direction of the boiler tube 300. According to an embodiment of the present disclosure, the reinforcement steel plate becomes flexible, thereby being able to enhance work efficiency.

The embodiments are intended for easy understanding of the present disclosure and are not in any way to be construed as limiting the present disclosure. The present disclosure may be modified and improved without departing from the scope of the disclosure, and equivalents thereof are also encompassed by the disclosure.

### [Reference Signs List]

- 10, 20, 30: reinforcement device
- 11, 21, 31: steel strip
- 12A, 22A, 33A: first reinforcement member
- 12B, 22B, 33B: second reinforcement member
- 13, 23, 34: first flange
- 14, 24, 35: first hole
- 15, 25, 36: second flange
- 16, 26, 37: second hole
- 17, 27, 38: bolt
- 18, 28, 39: nut
- 32: reinforcement steel plate
- 32B: thin steel portion
- 32C: hole
- 100, 200, 300: boiler tube
- 201 elbow: portion
- 102, 204 to 207, 302: weld portion

## Claims

1. A boiler tube reinforcement device configured to reinforce a boiler tube including a weld portion, the reinforcement device comprising:
a strip-shaped first steel plate configured to be wound and fixed by welding in a region including the weld portion of the boiler tube;
a first reinforcement member having a shape to be in surface contact with an outer peripheral surface corresponding to one semi-circumference of the boiler tube in an outer peripheral surface of the first steel plate wound around the boiler tube;
a second reinforcement member having a shape to be in surface contact with an outer peripheral surface corresponding to another semi-circumference of the boiler tube in the outer peripheral surface of the first steel plate wound around the boiler tube, the second reinforcement member being configured to cover the outer peripheral surface of the first steel plate together with the first reinforcement member; and
a coupling member configured to couple the first reinforcement member and the second reinforcement member together around the boiler tube.

2. The boiler tube reinforcement device according to claim 1, wherein
the first reinforcement member and the second reinforcement member each have a thickness that decreases at a constant rate toward both ends along a longitudinal direction of the boiler tube.

3. The boiler tube reinforcement device according to claim 1 or 2, wherein
when the first reinforcement member and the second reinforcement member are used to reinforce an elbow portion of the pipe, the first reinforcement member and the second reinforcement member each have a length, along the longitudinal direction of the boiler tube, set to be longer than a length of the elbow portion.

4. The boiler tube reinforcement device according to any one of claims 1 to 3, wherein
the coupling member includes:
first flanges disposed, on both sides of the first reinforcement member, along the longitudinal direction of the boiler tube, the first flanges having a plurality of first holes;
second flanges disposed, on both sides of the second reinforcement member, along the longitudinal direction of the boiler tube, the second flanges having a plurality of second holes;
a plurality of bolts to be inserted into the plurality of first holes and the plurality of second holes in a state where the first flanges and the second flanges are respectively aligned; and
a plurality of nuts to be threadedly engaged with the plurality of bolts.

5. The boiler tube reinforcement device according to any one of claims 1 to 4, further comprising:
a sheet-shaped second steel plate configured to be interposed between the first steel plate and the first and second reinforcement members, and wrapped around the boiler tube, wherein
the second steel plate includes a plurality of bend portions, so that the second steel plate is easily wrapped around the boiler tube, the plurality of bend portions being formed along the longitudinal direction of the boiler tube as well as formed at regular intervals along a circumferential direction of the boiler tube.

6. The boiler tube reinforcement device according to claim 5, wherein
in the second steel plate, the bend portions each includes a plurality of hole portions, the hole portions being formed at regular intervals along the longitudinal direction of the boiler tube.

7. A method for reinforcing a boiler tube including a weld portion, the method comprising:
a first step of winding a strip-shaped first steel plate in a region including the weld portion of the boiler tube, and fixing the first steel strip by welding;
a second step of covering a first outer peripheral surface of the first steel plate corresponding to one semi-circumference of the boiler tube, using a first reinforcement member having a shape to be in surface contact with the first outer peripheral surface;
a third step of covering a second outer peripheral surface of the first steel plate corresponding to another semi-circumference of the boiler tube, using a second reinforcement member having a shape to be in surface contact with the second outer peripheral surface; and
a fourth step of coupling the first reinforcement member and the second reinforcement member together using a coupling member.
